# EUROPEAN PATENT SPECIFICATION

(11) **EP 0 432 807 B1**
(45) Date of publication and mention of the grant of the patent: **18.09.1996**
(21) Application number: 90124477.2
(22) Date of filing: 17.12.1990
(51) Int. Cl.: G06F 12/08, G06F 11/10

(54) **Microprocessor having internal cache memory**
Mikroprozessor mit internem Cache-Speicher
Microprocesseur à antémémoire interne

(30) Priority: 15.12.1989 JP 326918/89
(43) Date of publication of application: 19.06.1991
(73) Proprietor: NEC CORPORATION, Tokyo (JP)
(72) Inventor: Sato, Yoshikuni, c/o NEC Corporation, Minato-ku, Tokyo (JP); Maemura, Kouji, c/o NEC IC Microcomputer System, Minato-ku, Tokyo (JP)
(74) Representative: Glawe, Delfs, Moll & Partner

(56) References cited:
- EP-A- 0 141 498
- US-A- 4 794 524
- US-A- 4 851 993

## Description

### Background of the Invention

### Field of the invention

The present invention relates to a microprocessor, and more specifically to a control of the microprocessor including an internal cache memory after the microprocessor has received an instruction or data including redundant information from an external device and has transferred the received instruction or data to the internal cache memory.

### Description of related art

In the prior art, no microprocessor including an internal cache memory has a redundant information circuit. Therefore, in a system requiring a reliability, a redundant information control circuit has be externally added to a microprocessor in order to ensure a high degree of reliability.

Here, consider one typical conventional system having a microprocessor and an external circuit for treating a parity bit which is one kind of redundant information. For example, when the microprocessor reads an instruction or data from an external memory, the microprocessor outputs an address to the external memory and a parity bit memory provided externally to the microprocessor. In response to the given address, the external memory supplies instruction or data selected by the given address, to the microprocessor and also to a parity control circuit provided externally to the microprocessor, and the parity bit memory outputs a parity bit selected by the given address, to the parity control circuit. On the basis of the received instruction or data and the received parity bit, the parity control circuit discriminates whether or not the instruction or data supplied to the microprocessor is valid. The result of this discrimination is sent to the microprocessor, and if the result of the discrimination indicates that the instruction or data supplied to the microprocessor is valid, the instruction or data supplied to the microprocessor is actually utilized or stored in the microprocessor.

In the above mentioned instruction or data transfer procedure, it is possible to discriminate whether or not the instruction or data supplied to the microprocessor is valid, only after the instruction or data is read out from the external memory and a syndrome has been calculated in the parity control circuit provided externally to the microprocessor. This means that an access time looked from a viewpoint of the microprocessor is a sum of an access time to the external memory and a syndrome calculation time. As a result, the system added with the parity bit becomes lower in performance than a system added with no parity bit, by an increased amount of the access time.

In order to overcome this problem, it has been proposed to early send data and lately send a data valid indication signal so that an access time becomes equal to a memory access time. In this case, a means for notifying the validity of the data to the microprocessor is limited only to the type such as interrupt in which an notification is acknowledged at a gap between instructions. However, this is disadvantageous in that when an erroneous instruction or data has been sent, the microprocessor knows the error at a delayed timing. Therefore, when the microprocessor has become aware of the error, the microprocessor can do no other than to execute an instruction or data processing on the basis of the erroneous data, or to clear all the data and/or instructions including valid data already stored in the cache memory. This means a large drop of performance.

### Summary of the Invention

Accordingly, it is an object of the present invention to provide a microprocessor internally having a cache memory and having a reduced access time to an external device having redundant information, without decrease of performance of the microprocessor.

The above object of the present invention is achieved in accordance with the present invention by a microprocessor as claimed in Claim 1.

The above object, features and advantages of the present invention will be apparent from the following description of preferred embodiments of the invention with reference to the accompanying drawings.

### Brief Description of the Drawings

Figure 1 is a block diagram of a system including the microprocessor in accordance with the present invention;
Figure 2 is a block diagram of one embodiment of the microprocessor in accordance with the present invention; and
Figure 3 is a timing chart illustrating an operation of the system shown in Figure 1 including the microprocessor shown in Figure 2.

### Description of the Preferred embodiments

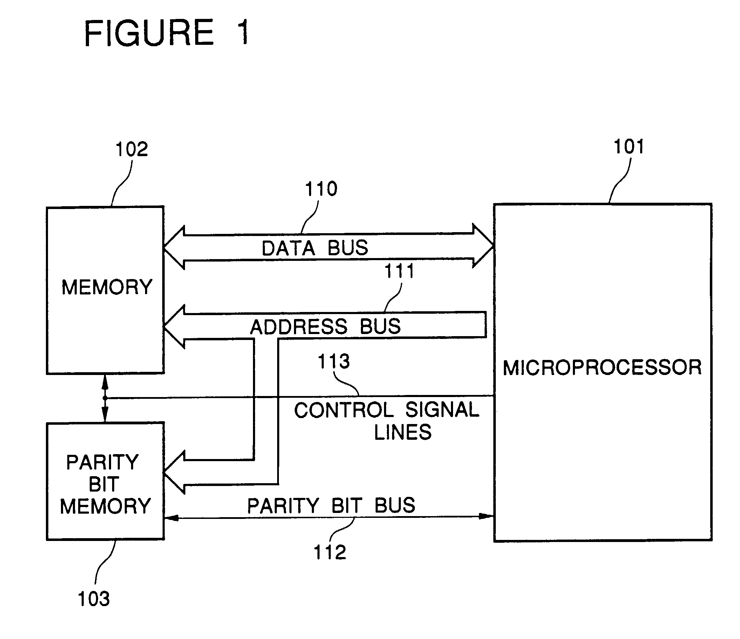

Referring to Figure 1, there is shown a block diagram of a system including the microprocessor in accordance with the present invention.

The shown system includes a microprocessor 101 embodying the present invention, a memory 102 storing instructions or data, and a parity bit memory 103 storing parity bits, a data bus 110 coupled to the microprocessor 101 and the data memory 102 for transferring an instruction or data between the microprocessor 101 and the data memory 102, and an address bus 111 for supplying from the microprocessor 101 to the data memory 102 and the parity bit memory 103 an address designating a location of each of the data memory 102 and the parity bit memory 103. In addition, the system includes a parity bit bus 112 for transferring parity bit information between the microprocessor 101 and the parity bit memory 103, and a group of control signal lines 113 for supplying control signals including a read/write signal and a timing signal, from the microprocessor 101 to the data memory 102 and the parity bit memory 103.

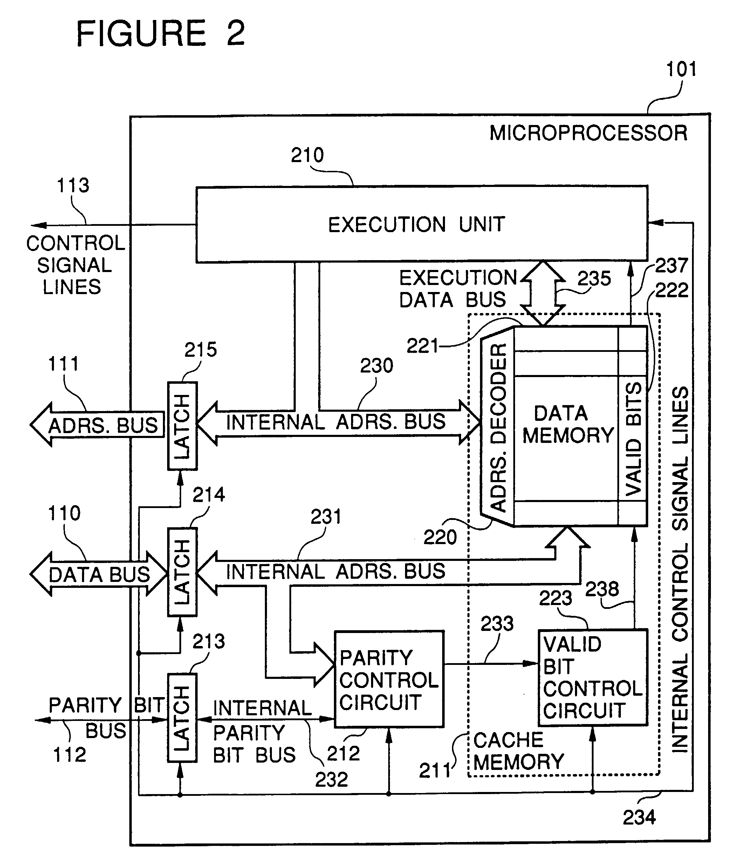

Referring to Figure 2, there is shown a block diagram of one embodiment of the microprocessor in accordance with the present invention. The microprocessor 101 includes an execution unit 210 for executing a data processing and for calculating an address of an operand and others, a cache memory 211 for storing instruction codes and a part of data, and a parity control circuit 212 for generating a parity bit for data on an internal data bus 231 and for executing a parity check for data on the internal data bus 231. The microprocessor 101 also includes a parity latch 213 coupled between the external parity bit bus 112 and an internal parity bit bus 232 for holding a parity bit, a data latch 214 coupled between the external data bus 110 and the internal data bus 231 for holding data, and an address latch 215 coupled between the external address bus 111 and an internal address bus 230 connected to the execution unit 210 for the purpose of holding an address outputted onto on the internal address bus 230 from the execution unit 210 so as to output the held address to the external address bus 111.

The cache memory 211 includes an address decoder 220 coupled to the internal address bus 230 so as to select one item of data (or an instruction) stored in the cache memory, a data memory section 221 for storing a number items of data, and a valid bit section 222 for storing one item of information indicating whether or not an item of data stored in the data memory section 221 and selected by the address decoder 220 is valid. The cache memory 221 also includes a valid bit control circuit 223 for determining whether or not each bit of the valid bit section 222 should be validated.

The above mentioned internal data bus 231 is connected so as to mutually couple the data latch 214, the cache memory 211 and the parity control circuit 212, and the internal parity bit bus 232 is connected so as to couple mutually the parity latch 213 and the parity control circuit 212. A parity calculation result signal line 233 is connected so as to supply to the valid bit control circuit 223 a signal indicative of the result of a parity calculation executed in the parity control circuit 212. A group of internal control signal lines 234 are connected to the execution unit 210, the cache memory 211, the parity control circuit 212 and the latches 213, 214 and 215 for transferring various control signals between the execution unit 210, the cache memory 211, the parity control circuit 212 and the latches 213, 214 and 215. In addition, an execution data bus 235 is coupled between the execution unit 210 and the cache memory 211. The execution unit 210 outputs various control signals through the external control signal lines 113.

Now, an operation of the system shown in Figure 1 including the microprocessor shown in Figure 2 will be described with reference to Figures 1 and 2.

When the execution unit 210 reads out an instruction, the execution unit 210 outputs an address to the internal address bus 230. At this time, the address on the internal address bus 230 is checked so as to ascertain whether or not an instruction corresponding to the given address exists within the cache memory 211. If the instruction corresponding to the given address exists within the cache memory 211, the address on the internal address bus 230 is decoded by the address decoder 220 so that one location is selected within the data memory section 221 and one valid bit is selected in the valid bit section 222. If the selected valid bit is active, this is informed to execution unit 210 through a line 237, and the data stored in the selected location of the data memory section 221 is read out and supplied to the execution unit 210 through the execution data bus 235.

To the contrary, if the selected valid bit is inactive, reference is made to an instruction stored in the external memory 102. In the following, an operation performed when if the selected valid bit is inactive will be described.

The address on the internal address bus 230 is latched in the address latch 215 and outputted onto the external address bus 111. At this time, the execution unit 210 outputs, through the external control signal lines 113, a signal indicative of a memory read and a signal indicative of a memory read timing. In response to these signals, the data memory 102 outputs an instruction or data selected by the given address, to the external data bus 110, and the parity bit memory outputs to the external parity bit bus 112 a parity bit selected by the given address and corresponding to the selected instruction or data.

The microprocessor 101 controls to the effect that the instruction or data outputted to the external data bus 110 is latched in the data latch 214, and the parity bit outputted to the external parity bit bus 112 is latched in the parity bit latch 213. The data latched in the data latch 214 is supplied to the data memory section 221 and the parity control circuit 212. In the data memory section 221, the received data is held. On the other hand, the parity bit latched in the parity bit latch 213 is supplied through the internal parity bit bus 232 to the parity control circuit 212, where a syndrome is calculated on the basis of the received data and the received parity bit in order to discriminate whether or not the received data latched in the data latch 214 is correct. The result of this discrimination is sent through the parity result signal line 233 to the valid bit control circuit 223.

When the received data latched in the data latch 214 is correct, the valid bit control circuit 223 activates a corresponding valid bit of the valid bit section 222 through a line 238. As a result, the data sent from the external memory 102 is stored in the cache memory as a valid data. On the other hand, if it is discriminated in the parity control circuit 212 that the data sent from the external memory 102 and latched in the data latch 214 is in error, the valid bit control circuit 223 does not activate a corresponding valid bit of the valid bit section 222. This is also notified to the execution unit 210 through the internal control signal lines 234, so that the execution unit 210 triggers a bus cycle, again, for the purpose of fetching the data, again, or executes a necessary processing such as stop of the instruction processing.

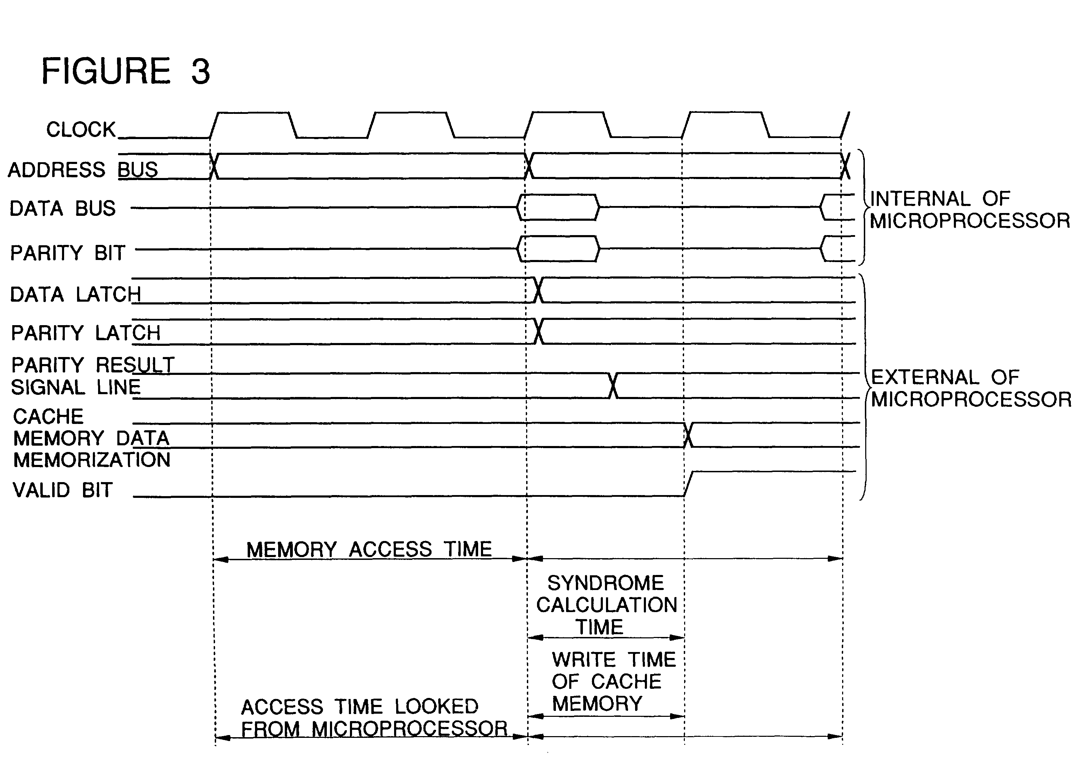

The above mentioned operation is illustrated in Figure 3 in the form of a timing chart. As seen from Figure 3, the syndrome calculation is executed in parallel to the writing of the data or instruction to the cache memory. From a viewpoint of the microprocessor, the time for syndrome calculation apparently disappears, and therefore, the memory access in the system added with the parity bit can be realized with the access time realized in a system added with no parity bit. In other words, the performance of the system added with the parity bit can be improved.

The above mentioned embodiment has been directed to an example in which one bit of parity information is added to data which is transferred through the data bus. However, it would be apparent to persons skilled in the art that it is possible to perform a similar control in the case that the data bus is divided into a plurality of data buses and a parity bit or a redundant control bit string other than the parity is added to each of the plurality of data buses.

As seen from the above, when an erroneous data has been transferred or supplied because of noises or other causes in the way of transferring an instruction or data, or when a content of a memory has been broken by a soft error or other causes, the microprocessor in accordance with the present invention internally having a cache memory can avoid storing the erroneous data as a valid data. Therefore, the microprocessor is prevented from malfunctioning. In addition, when the erroneous data has been supplied, it is possible to invalidate only the erroneous data without clearing or invalidating a whole content of the cache memory. Therefore, it is possible to avoid drop of performance in the system.

## Claims

1. A microprocessor to be coupled to an external means so as to receive therefrom an instruction or data for data processing and redundant information associated to the instruction or data for data processing, said microprocessor internally comprising data holding means for receiving said instruction or data for data processing from said external means and for holding the received instruction or data, redundant information holding means for receiving from said external means said redundant information associated to said instruction or data for data processing and for holding the received redundant information, a cache memory for receiving and storing the received instruction or data held in said data holding means, and checking means receiving the received instruction or data held in said data holding means and the received redundant information held in said redundant information holding means at substantially the same time that said cache memory receives the received instruction or data held in said data holding means, said checking means operating to check validity of the received instruction or data, in parallel with a writing of the received instruction or data into said cache memory.

2. A microprocessor claimed in Claim 1 wherein said cache memory includes a valid bit prepared for each of the received instruction or data in order to indicate validity of the stored instruction or data, said checking means operating, when the result of the checking indicates that the received instruction or data is valid, to activate a valid bit of said cache memory corresponding to the received instruction or data which had been written into said cache memory when said checking means had been checking validity of the same received instruction or data.

3. A microprocessor claimed in Claim 2 wherein said redundant information is a parity bit, and wherein said external means includes an data memory storing said instruction or data for data processing and coupled to said microprocessor through an external address bus and an external data bus, and a parity bit memory storing parity bits each associated to a corresponding one of instructions or data stored in said data memory, each of said parity bits being stored at the same address as that of the corresponding instruction or data stored in said data memory, said parity bit memory being coupled to said microprocessor through said external data bus and an external parity bit bus.

4. A microprocessor claimed in Claim 3 wherein said data holding means includes a data latch coupled to said external data bus and also coupled through an internal data bus to said cache memory and said checking means, and said redundant information holding means includes a parity bit latch coupled to said external parity bit bus and also coupled through an internal parity bit bus to said checking means, and further including an execution unit coupled to an internal address bus and to said cache memory through an execution data bus, and an address latch coupled to said external address bus and also coupled through said internal address bus to said execution unit and said cache memory.

5. A microprocessor claimed in Claim 4 wherein wherein said checking means includes a parity control circuit receiving the received instruction or data held in said data latch and the received parity bit held in said parity bit latch for calculating a syndrome on the basis of the received instruction or data and the received parity bit, said parity control circuit operating to output an active signal when the result of the calculated syndrome indicates that the received instruction or data is valid, and wherein said cache memory includes a valid bit control circuit responding to said active signal outputted from said parity control circuit so as to activate the valid bit of said cache memory corresponding to the received instruction or data.

## Patentansprüche

1. Mikroprozessor, der an eine externe Einrichtung gekoppelt werden kann, um von dieser Instruktion oder Daten zur Datenverarbeitung und redundante Information, die der Instruktion oder den Daten zur Datenverarbeitung zugeordnet ist, zu empfangen, wobei der Mikroprozessor intern aufweist Datenhaltemittel zum Empfangen der Instruktion oder Daten zur Datenbearbeitung von der externen Einrichtung und zum Halten der empfangenen Instruktion und Daten, Redundanz information-Haltemittel zum Empfangen der redundanten Information, die der Instruktion oder den Daten für die Datenverarbeitung zugeordnet ist, von der externen Einrichtung, und zum Halten der empfangenen, redundanten Information, einen Cache-Speicher zum Empfangen und Speichern der empfangenen Information oder Daten, die in den Haltemitteln gehalten sind, und Prüfmittel, die die empfangene Instruktion oder Daten, die in den Haltemitteln gehalten sind, und die empfangene, redundante Information, die in den Redundanzinformations-Haltemitteln gehalten ist, im wesentlichen zur gleichen Zeit wie der Cache-Speicher die empfangene Instruktion oder Daten, die in den Datenhaltemitteln gehalten sind, empfängt, empfangen, wobei die Prüfmittel so arbeiten, daß sie die Gültigkeit der empfangenen Instruktion und Daten parallel zum Einschreiben der empfangenen Instruktion oder Daten in den Cache-Speicher überprüfen.

2. Mikroprozessor nach Anspruch 1,
wobei der Cache-Speicher ein Gültigkeitsbit aufweist, das für jede empfangene Instruktion oder Daten erzeugt wird, um die Gültigkeit der gespeicherten Information oder Daten anzuzeigen, wobei die Prüfmittel so arbeiten, daß, wenn das Ergebnis der Überprüfung angibt, daß die empfangene Instruktion oder Daten gültig ist oder sind, ein Gültigkeitsbit des Cache-Speichers entsprechend der empfangenen Instruktion oder der Daten, die in den Cache-Speicher eingeschrieben worden waren, während die Prüfmittel die Gültigkeit derselben empfangenen Instruktion oder Daten überprüft haben, aktiviert wird.

3. Mikroprozessor nach Anspruch 2,
wobei die redundante Information ein Paritätsbit ist, und wobei die externe Einrichtung einen Datenspeicher aufweist, der die Information oder Daten zur Datenverarbeitung speichert und an den Mikroprozessor über eine externe Adressenbusleitung und eine externe Datenbusleitung gekoppelt ist, und einen Paritätsbitspeicher, der Paritätsbits speichert, die jeweils einer entsprechenden Information oder Daten zugeordnet sind, welche im Datenspeicher gespeichert ist, wobei jedes Paritätsbit mit der gleichen Adresse unter der die zugehörige Information oder die Daten in dem Datenspeicher gespeichert sind, gespeichert wird, wobei der Paritätsbitspeicher über die externe Datenbusleitung und eine externe Paritätsbit-Busleitung an den Mikroprozessor gekoppelt ist.

4. Mikroprozessor gemäß Anspruch 3,
wobei die Datenhaltemittel einen Datenzwischenspeicher aufweisen, der an die externe Datenbusleitung und auch über eine interne Datenbusleitung an den Cache-Speicher und die Prüfmittel gekoppelt ist, und die Redundanzinformation-Haltemittel einen Paritätsbit-Zwischenspeicher aufweisen, der an die externe Paritätsbit-Busleitung und auch über eine interne Paritätsbit-Busleitung an die Prüfmittel gekoppelt ist, und weiterhin eine Ausführungseinheit aufweist, die an die interne Adressenbusleitung und über eine Ausführungs-Datenbusleitung an den Cache-Speicher gekoppelt ist, und ein Adressen-Zwischenspeicher an die externe Adressenbusleitung und auch über die interne Adressenbusleitung an die Ausführungseinheit und den Cache-Speicher gekoppelt ist.

5. Mikroprozessor nach Anspruch 4,
wobei die Prüfmittel eine Paritätssteuerschaltung haben, die die empfangene Instruktion oder Daten, die in dem Datenzwischenspeicher gehalten sind, und das empfangene Paritätsbit, das im Paritätsbit-Zwischenspeicher gehalten ist, empfangen, um auf der Basis der empfangenen Instruktion oder Daten und des empfangenen Paritätsbits ein Syndrom zu berechnen, wobei die Paritätssteuerschaltung so arbeitet, daß sie ein aktives Signal ausgibt, wenn das Ergebnis des berechneten Syndroms anzeigt, daß die empfangene Instruktion oder Daten gültig ist oder sind, und wobei der Cache-Speicher eine Gültigkeitsbit-Steuerschaltung aufweist, die auf das aktive Signal anspricht, das von der ParitätsSteuerschaltung ausgegeben worden ist, um das Gültigkeitsbit des Cache-Speichers entsprechend der empfangenen Instruktion oder der Daten zu aktivieren.

## Revendications

1. Microprocesseur à coupler à des moyens externes de manière à en recevoir une instruction ou des données pour un traitement de données et une information redondante associée à l'instruction ou aux données pour un traitement de données, ledit microprocesseur comprenant de façon interne des moyens de blocage de données pour recevoir ladite instruction ou lesdites données pour un traitement de données depuis lesdits moyens externes et pour bloquer l'instruction ou les données reçue(s), des moyens de blocage d'information redondante pour recevoir depuis lesdits moyens externes ladite information redondante associée à ladite instruction ou auxdites données pour un traitement de données et pour bloquer l'information redondante reçue, une mémoire cache pour recevoir et stocker l'instruction ou les données reçue(s) bloquée(s) dans lesdits moyens de blocage de données et des moyens de vérification qui reçoivent l'instruction ou les données reçue(s) bloquée(s) dans lesdits moyens de blocage de données et l'information redondante reçue bloquée dans lesdits moyens de blocage d'information redondante sensiblement en même temps que ladite mémoire cache reçoit l'instruction ou les données reçue(s) bloquée(s) dans lesdits moyens de blocage de données, lesdits moyens de vérification fonctionnant pour vérifier la validité de l'instruction ou des données reçue(s), en parallèle avec une écriture de l'instruction ou des données reçue(s) dans ladite mémoire cache.

2. Microprocesseur selon la revendication 1, dans lequel ladite mémoire cache inclut un bit valide préparé pour chacune des instructions ou données reçue(s) afin d'indiquer la validité de l'instruction ou des données stockée(s), lesdits moyens de vérification fonctionnant, lorsque le résultat de la vérification indique que l'instruction ou les données reçue(s) est(sont) valide(s), pour activer un bit valide de ladite mémoire cache correspondant à l'instruction ou aux données reçue(s) qui a été(ont) été écrite(s) dans ladite mémoire cache lorsque lesdits moyens de vérification ont vérifié la validité de la même instruction ou des mêmes données reçue(s).

3. Microprocesseur selon la revendication 2, dans lequel ladite information redondante est un bit de parité et dans lequel lesdits moyens externes incluent une mémoire de données qui stocke ladite instruction ou lesdites données pour un traitement de données et qui est couplée audit microprocesseur par l'intermédiaire d'un bus d'adresse externe et d'un bus de données externe, et une mémoire de bits de parité qui stocke des bits de parité associés chacun à une des instructions ou données correspondantes stockée(s) dans ladite mémoire cache, chacun desdits bits de parité étant stocké à la même adresse que celle de l'instruction ou des données correspondante(s) stockée(s) dans ladite mémoire de données, ladite mémoire de bits de parité étant couplée audit microprocesseur par l'intermédiaire dudit bus de données externe et d'un bus de bits de parité externe.

4. Microprocesseur selon la revendication 3, dans lequel lesdits moyens de blocage de données incluent une bascule de données couplée audit bus de données externe et également couplée par l'intermédiaire d'un bus de données interne à ladite mémoire cache et auxdits moyens de vérification, et lesdits moyens de blocage d'information redondante incluent une bascule de bits de parité couplée audit bus de bits de parité externe et également couplée par l'intermédiaire d'un bus de bits de parité interne auxdits moyens de vérification, et incluant en outre une unité d'exécution couplée à un bus d'adresse interne et à ladite mémoire cache par l'intermédiaire d'un bus de données d'exécution, et une bascule d'adresse couplée audit bus d'adresse externe et également couplée par l'intermédiaire dudit bus d'adresse interne à ladite unité d'exécution et à ladite mémoire cache.

5. Microprocesseur selon la revendication 4, dans lequel lesdits moyens de vérification incluent un circuit de commande de parité qui reçoit l'instruction ou les données reçue(s) bloquée(s) dans ladite bascule de données et le bit de parité reçu bloqué dans ladite bascule de bits de parité pour calculer un syndrome sur la base de l'instruction ou des données reçue(s) et du bit de parité reçu, ledit circuit de commande de parité fonctionnant pour émettre en sortie un signal actif lorsque le résultat du syndrome calculé indique que l'instruction ou les données reçue(s) est(sont) valide(s) et dans lequel ladite mémoire cache inclut un circuit de commande de bit valide répondant audit signal actif émis en sortie depuis ledit circuit de commande de parité de manière à activer le bit valide de ladite mémoire cache correspondant à l'instruction ou aux données reçue(s).
